# FASCICULE DE BREVET EUROPEEN

(11) **EP 0 866 972 B1**
(45) Date de publication et mention de la délivrance du brevet: **02.08.2000**
(21) Numéro de dépôt: 96941729.4
(22) Date de dépôt: 10.12.1996
(51) Int. Cl.: G01P 15/08, G01P 15/12, G01P 15/13

(54) **ACCELEROMETRE ET PROCEDE DE FABRICATION**
BESCHLEUNIGUNGSSENSOR UND VERFAHREN ZU SEINER HERSTELLUNG
ACCELEROMETER AND METHOD FOR MAKING SAME

(30) Priorité: 12.12.1995 FR 9514686
(43) Date de publication de la demande: 30.09.1998
(73) Titulaire: THOMSON-CSF SEXTANT, 78141 Vélizy Villacoublay (FR)
(72) Inventeur: LEFORT, Olivier Thomson-CSF S.C.P.I., F-94117 Arcueil Cédex (FR); PEDRAZA-RAMOS, Sylvie Thomson-CSF S.C.P.I., F-94117 Arcueil Cédex (FR); PRESSET, René Thomson-CSF S.C.P.I., F-94117 Arcueil Cédex (FR); GIROUD, Pierre Thomson-CSF S.C.P.I., F-94117 Arcueil Cédex (FR)
(74) Mandataire: Guérin, Michel
(86) Numéro de dépôt international: FR9601968
(87) Numéro de publication internationale: WO9722010

(56) Documents cités:
- WO-A-95/04284
- DE-A- 3 740 688
- DE-A- 4 016 472
- DE-A- 4 027 046
- US-A- 5 121 633

## Description

Le domaine de l'invention est celui des micro-structures déformables à fonctionnement bidirectionnel, en particulier, celui des accéléromètres comprenant une masse mobile reliée à un cadre fixe par l'intermédiaire de bras fins de suspension.

Les accélérations subies par la masse mobile peuvent typiquement être détectées grâce à la présence de jauges piézorésistives au niveau des bras fins de suspension. De telles jauges piézorésistives peuvent également commander un dispositif d'asservissement électromagnétique de la masse mobile, pour en compenser les déplacements.

Dans ce cas, les jauges de contraintes de l'accéléromètre sont destinées à générer au moyen d'un circuit électronique, un courant d'alimentation d'une bobine pour compenser, par des phénomènes d'induction électromagnétique, un déplacement de la masse mobile sous l'effet de conditions extérieures, par exemple de mouvements sismiques.

Actuellement, de tels accéléromètres peuvent être élaborés à partir de plaquettes de silicium, en utilisant des techniques de gravure du silicium, développées dans le cadre de la fabrication des composants électroniques à semiconducteurs. L'emploi de telles technologies permet de réaliser la masse mobile et les éléments qui y sont associés par un processus collectif sur des tranches de silicium et ainsi de définir une série de capteurs d'accélération, en un nombre limité d'étapes technologiques.

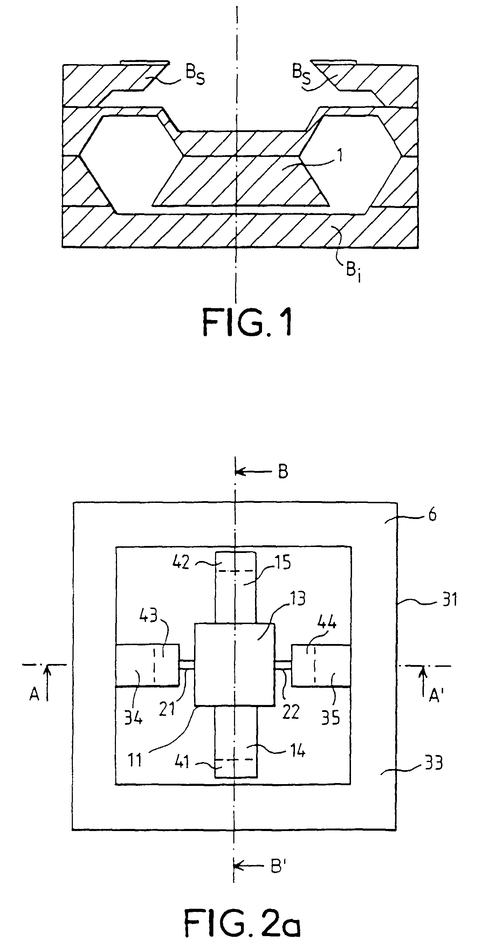

Typiquement, la fabrication de ce type de capteurs comprend l'assemblage de plusieurs plaquettes de silicium, au moins une plaquette centrale dans laquelle est réalisée la masse mobile et deux plaquettes extérieures possédant des éléments de butées pour la masse mobile, permettant ainsi de limiter l'ampleur des mouvements auxquels pourrait être soumis ladite masse mobile, et donc d'optimiser la protection de la masse mobile et des bras de suspension. Un exemple d'accéléromètre constitué d'au moins trois plaquettes de silicium selon l'art connu est illustré en figure 1.

Plus précisément, la figure 1 illustre une coupe transversale de ce type d'accéléromètre dont la fabrication résulte notamment de l'assemblage de 4 plaquettes de silicium, une plaquette dite supérieure constituant une partie du cadre fixe et comprenant des butées supérieures Bs, deux plaquettes centrales constituant la masse mobile 1 et une partie du cadre fixe et une quatrième plaquette, dite inférieure comprenant une partie du cadre fixe et un plan de butée Bi pour la face inférieure de la masse mobile.

Pour simplifier l'architecture de ce type d'accéléromètre et en faciliter le procédé de fabrication, on connaît des accéléromètres résultant de l'assemblage des deux plaquettes dans lesquelles tous les éléments et fonctions sont définis (masse mobile, bras de suspension, cadre) tels que divulgués dans la demande WO 95/04284 ou le brevet US 5 121 633.

La demande propose également une architecture simplifiée dans lesquelles les fonctions de butées et de contre-butées sont astucieusement réalisées.

Plus précisément, l'invention a pour objet un accéléromètre comprenant une masse mobile reliée à un cadre fixe, la masse mobile et le cadre fixe étant définis dans l'empilement de deux plaques de silicium monocristallin dites plaque supérieure et plaque inférieure, caractérisé en ce que :
- la plaque supérieure comprend :
   - la partie supérieure de la masse mobile, comportant une première et une seconde contre-butées le long d'un axe Y défini dans le plan de la masse mobile ;
   - la partie supérieure du cadre fixe, comportant une première et une seconde butées le long d'un axe X perpendiculaire à l'axe Y et défini dans le plan de la masse mobile ;
   - la partie supérieure de la masse mobile et la partie supérieure du cadre fixe étant reliées par des bras de suspension ;
- la plaque inférieure comprend :
   - la partie inférieure de la masse mobile, comportant une troisième et une quatrième contre-butées le long de l'axe X;
   - la partie inférieure du cadre fixe, comportant une troisième et une quatrième butées le long de l'axe Y ;
- les première et seconde contre-butées étant respectivement en regard des troisième et quatrième butées ;
- les troisième et quatrième contre-butées étant respectivement en regard des première et second butées.

Par convention, les butées sont définies comme des éléments fixes de l'accéléromètre sur lesquelles viennent buter des contre-butées, éléments mobiles de l'accéléromètre.

Selon une variante de l'invention, l'accéléromètre est caractérisé en ce que :
- la partie supérieure de la masse mobile comprend une première partie centrale et des premier et second bras de blocage situés de part et d'autre de ladite première partie centrale, selon l'axe Y ;
- la partie supérieure du cadre fixe comprend une partie périphérique et des premier et second bras situés à l'intérieur de la partie périphérique, selon l'axe X, la plaque supérieure comprenant des premier et second bras de suspension reliant la partie centrale de la partie supérieure de la masse mobile, aux premier et second bras de la partie périphérique ;
- la partie inférieure de la masse mobile comprend une partie centrale et des troisième et quatrième bras de blocage situés de part et d'autre de ladite seconde partie centrale, selon l'axe X ;
- la partie inférieure du cadre fixe comprend une partie périphérique et des troisième et quatrième bras situés à l'intérieur de la partie périphérique selon l'axe Y ;
- les première et seconde contre-butées étant définies dans les premier et second bras de blocage ;
- les première et seconde butées étant définies dans les premier et second bras ;
- les troisième et quatrième contre-butées étant définies dans les troisième et quatrième bras de blocage ;
- les troisième et quatrième butées étant définies dans les troisième et quatrième bras.

Selon une variante de l'invention, les plaques 6 et 7 de l'accéléromètre comprennent des bras fins de guidage reliant la masse mobile 1 au cadre 3 de manière à ce que seuls des mouvements de la masse mobile selon un axe Z perpendiculaire au plan de ladite masse, soient possibles. Avantageusement, ces bras peuvent être situés selon deux axes orientés à 45° des axes X et Y et situés au niveau de la partie supérieure de la plaque 6 et au niveau inférieur de la plaque inférieure 7, c'est-à-dire dans des plans correspondant au plan extérieur de la plaque 6 et au plan extérieur de la plaque 7, les plans intérieurs desdites plaques correspondant au plan de contact de cesdites plaques.

L'invention sera mieux comprise et d'autres avantages apparaîtront à la lecture de la description qui va suivre, donnée à titre non limitatif et grâce aux figures annexées, parmi lesquelles :
- la figure 1 illustre un accéléromètre selon l'art antérieur ;
- la figure 2a illustre la plaque supérieure utilisée dans un exemple d'accéléromètre selon l'invention ;
- la figure 2b illustre la plaque inférieure utilisée dans un exemple d'accéléromètre selon l'invention ;
- la figure 3a illustre une coupe transversale selon un plan représenté par l'axe AA' de l'ensemble des plaques 6 et 7, représentés sur les figures 2a et 2b ;
- la figure 3b illustre une coupe transversale selon un plan représenté par l'axe BB' de l'ensemble des plaques 6 et 7 représentées sur les figures 2a et 2b ;
- la figure 4a illustre un exemple de plaque 6 avec quatre bras de guidage ;
- la figure 4b illustre un exemple de plaque 7 avec quatre bras de guidage ;
- la figure 5 illustre les étapes de procédé de réalisation d'une plaque inférieure utilisée dans un accéléromètre selon l'invention ;
- la figure 6 illustre les étapes de procédé de réalisation d'une plaque supérieure utilisée dans un accéléromètre selon l'invention.

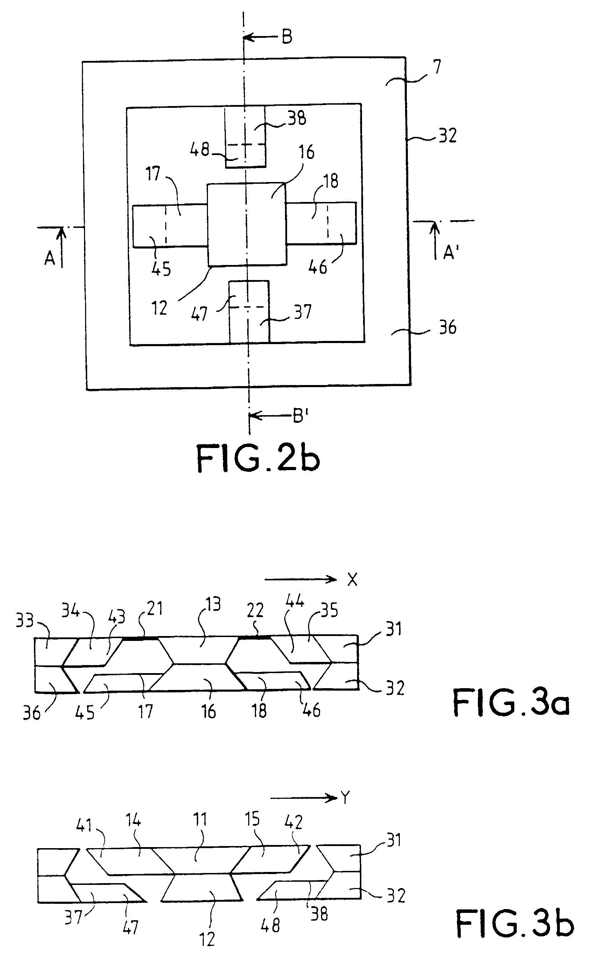

Un mode de réalisation de l'accéléromètre selon l'invention est illustré par l'ensemble des figures 2 et 3. Les figures 2a et 2b sont relatives aux plaques 6 et 7 dont l'empilement permet de définir la masse mobile 1 reliée à un cadre fixe 3.

La figure 2a est relative à la plaque supérieure 6. Cette plaque 6 comprend la partie supérieure 11 de la masse mobile constituée d'une partie centrale 13 et de deux bras de blocage 14 et 15 situés de part et d'autre de la partie centrale et orientés sur la figure 2a selon l'axe Y.

La plaque supérieure 6 comprend aussi la partie supérieure 31 du cadre fixe, constituée d'une partie périphérique 33 et de deux bras 34 et 35, orientés sur la figure 2a selon l'axe X.

Une partie 42 du bras de blocage 15 et une partie 43 du bras de blocage 14 constituent des contre-butées sur la partie 11 de la masse mobile.

Une partie 43 du bras 34 et une partie 44 du bras 35 constituent des butées sur la partie 31 du cadre fixe.

Cette plaque 6 comprend également deux bras de suspension 21 et 22 reliant la partie centrale 13 de la masse mobile aux bras 34 et 35 solidaires du cadre fixe.

La figure 2b est relative à la plaque inférieure 7. Cette plaque 7 comprend la partie inférieure 12 de la masse mobile constituée d'une partie centrale 16 et de deux bras de blocage 17 et 18 orientés sur la figure selon l'axe X.

La plaque 7 comprend également la partie inférieure 32 du cadre fixe, constituée d'une partie périphérique 36 et de deux bras 37 et 38, orientés sur la figure selon l'axe Y.

Une partie 42 du bras de blocage 15 et une partie 41 du bras de blocage 14 constituent des contre-butées respectivement en regard de la butée 48 partie du bras 38 et de la butée 47 partie du bras 37.

De même, une partie 45 du bras de blocage 17 et une partie 46 du bras de blocage 18 constituent des contre-butées respectivement en regard de la butée 43 du bras 34 et de la butée 44 du bras 35.

Les figures 3a et 3b illustrent comment peuvent être réalisées les différentes butées et les différentes contre-butées.

Les bras 17, 18, 37 et 38 de la plaque inférieure 7 présentent la même architecture. Ils sont constitués d'un second élément d'épaisseur e₁ inférieure à l'épaisseur e_{O} d'une plaque de silicium. La différence d'épaisseur entre ces bras et les autres parties de la plaque de silicium permet d'élaborer des butées ou contre-butées pour les contre-butées ou butées qui sont respectivement en regard.

Les bras 14, 15, 34 et 35 de la plaque supérieure 6 présentent tous la même architecture. Ils sont constitués d'un seul élément d'épaisseur e_{O}, une partie de chaque bras étant en regard de la partie amincie constituant un bras dans la plaque inférieure 7.

Nous allons décrire un exemple de procédé de réalisation d'un accéléromètre selon l'invention, élaboré à partir de l'empilement de deux plaques de silicium.

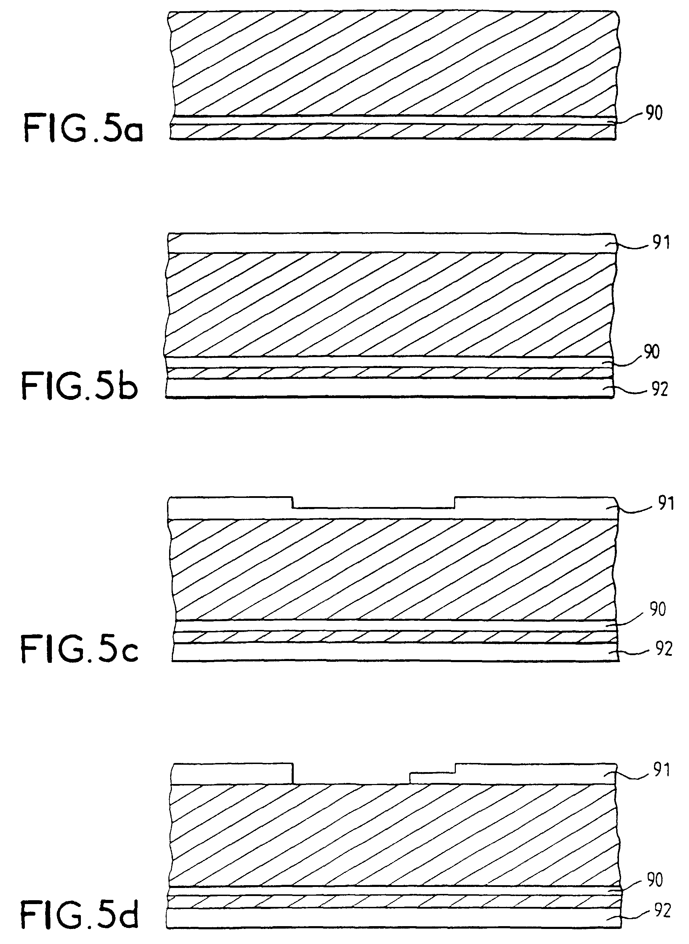

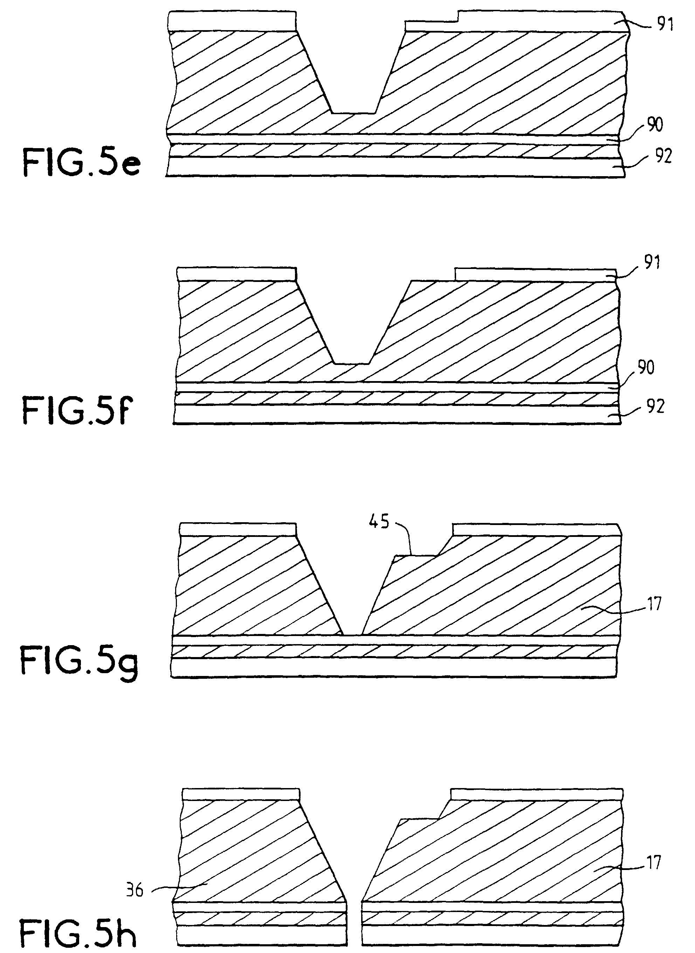

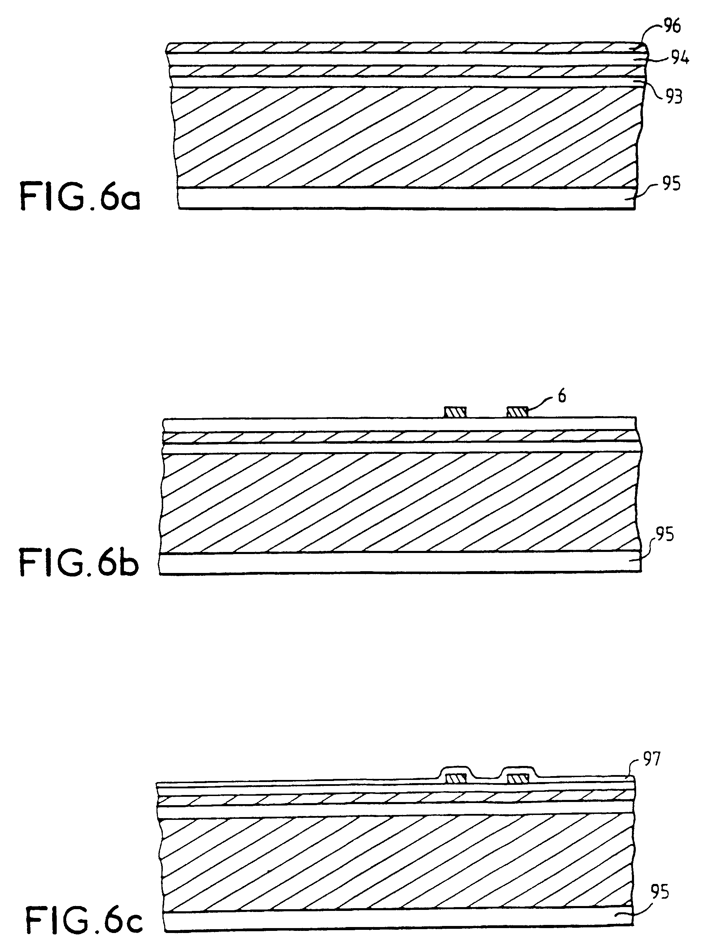

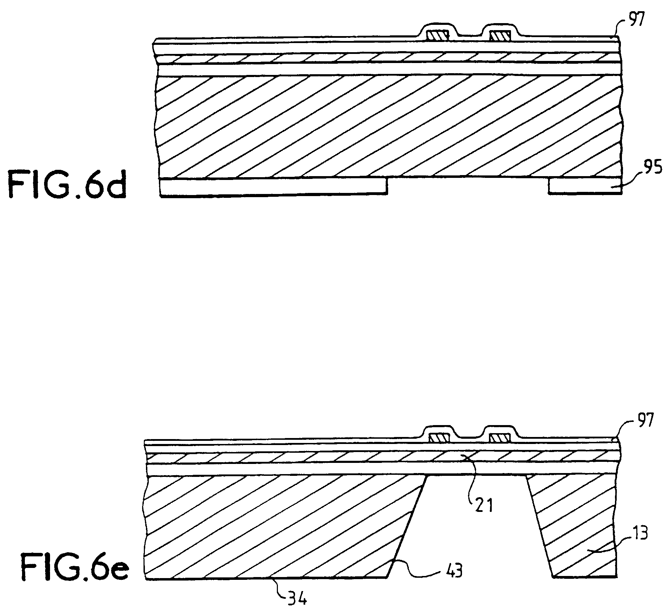

Les figures 5 et 6 illustrent respectivement les étapes de procédé de réalisation de la plaque inférieure sans jauge piézorésistive et le procédé de réalisation de la plaque supérieure avec jauges piézorésistives.

Plus exactement, l'ensemble de la figure 5 décrit la réalisation des éléments 36, 17, 16 représentés en figure 3a, et l'ensemble de la figure 6 décrit la réalisation des éléments 33, 43, 21, 13 représentés en figure 3a.

Pour conférer une certaine robustesse à l'accéléromètre, les plaques supérieure et inférieure peuvent comprendre des bras fins de guidage, assurant un maintien de la masse mobile par rapport au cadre fixe.

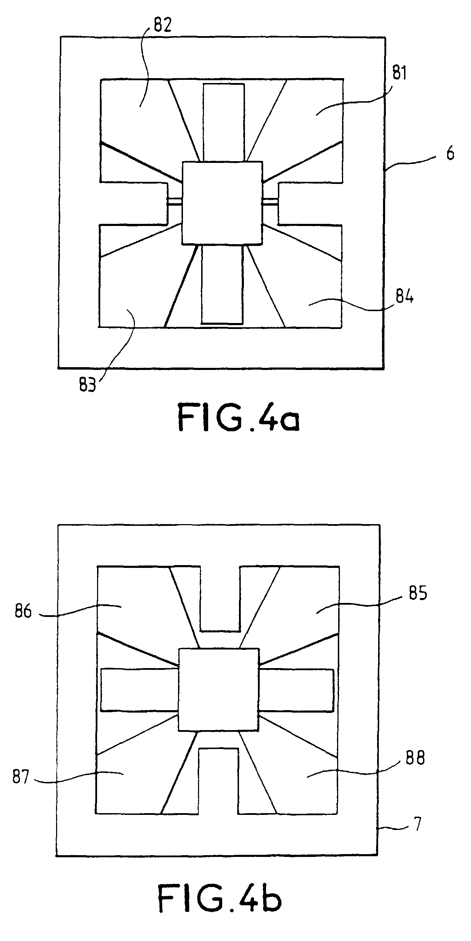

Les figures 4a et 4b illustrent un exemple de configuration dans laquelle la plaque supérieure comprend quatre bras de guidage 81, 82, 83, 84 (figure 4a) et la plaque inférieure comprend également quatre bras de guidage 85, 86, 87, 88 (figure 4b). Typiquement, les bras de guidage peuvent avoir une épaisseur voisine de celle des bras de suspension 21 et 22 et être d'une part situés dans la partie supérieure de la plaque 6 (dans le même plan que les bras de suspension) et situés d'autre part dans la partie inférieure de la plaque 7.

Pour élaborer les différents éléments de la plaque inférieure 7, on peut utiliser un substrat de type SIMOX correspondant à un substrat silicium monocristallin dans lequel est implantée une couche d'oxyde 90 (figure 5a).

Deux couches d'oxyde ou de nitrure 91 et 92 sont ensuite réalisées sur les deux faces du substrat de type SIMOX (figure 5b).

On réalise un masque par photolithographie et gravure au niveau de la couche 91 (figure 5c).

Ce masque est affiné par une seconde étape de gravure comme l'illustre la figure 5d.

On procède à une gravure chimique classique du silicium dans les régions dépourvues de couche de protection (figure 5e).

La couche d'oxyde ou de nitrure 91 est ensuite amincie comme illustrée en figure 5f.

On procède à une seconde étape de gravure silicium qui permet de définir la contre butée 45 dans le bras de blocage 17 (figure 5g).

On procède enfin à une étape de gravure laser qui conduit à la séparation du bras de blocage 17 de la partie périphérique 36 du cadre fixe (figure 5h).

Pour réaliser les fonctions désirées au niveau de la plaque supérieure 6, il peut être particulièrement avantageux d'utiliser une plaquette de silicium dans laquelle ont été réalisées deux couches isolantes 93 et 94, ladite plaquette étant par ailleurs recouverte sur la face opposée d'une couche isolante 95.

Les deux couches implantées 93 et 94 peuvent être réalisées de plusieurs manières.

On peut utiliser une plaquette de type SIMOX dans laquelle est implantée de manière classique la couche 93. On peut de manière classique implanter une couche d'épaisseur 4000 Å, à une profondeur d'environ 4000Å. Il est alors possible de procéder par épitaxie à la croissance de la couche de silicium monocristallin. Dans cette couche épitaxiée on peut alors implanter la couche d'oxyde 94 (figure 6a).

Un autre procédé consiste à souder à haute température deux plaquettes de silicium dont une est oxydée en surface. On obtient un ensemble de deux plaquettes de silicium assemblées au niveau de la couche d'oxyde qui constitue alors la couche 93. L'une des plaquettes peut ensuite être usinée de manière à définir l'épaisseur désirée de silicium dans laquelle on peut réaliser une implantation ionique d'oxygène pour définir la couche 94.

La couche 96 de faible épaisseur permet de définir des éléments de silicium isolés du reste des plaquettes pouvant constituer des jauges piézoélectriques mieux définies et calibrées que celles résultant de manière classique, d'implantation au sein d'un substrat silicium (figure 6b).

Les jauges piézoélectriques sont protégées par une couche 97 de nitrure par exemple, ou d'oxyde, ou les deux, des ouvertures au niveau de la couche 97 sont localement réalisées pour permettre les connexions électriques (figure 6c).

Une couche conductrice peut alors être déposée puis gravée pour former de manière connue, des pistes de raccordement de chaque jauge, non représentée en figure 6c.

Un masque est réalisé par gravure au travers de la couche 95 comme illustré en figure 5d.

La fabrication de ce masque est suivie d'une étape de gravure chimique du silicium, permettant de définir le bras de suspension 21, le bras 34 avec sa butée 43 ainsi que la partie centrale supérieure de la masse mobile 13.

Les deux plaques de silicium 6 et 7 ainsi usinées peuvent être soudées par chauffage typiquement à une température de l'ordre de 1000°C.

L'assemblage des deux plaques peut être effectué avant de réaliser la découpe laser illustrée en figure 5h qui permet de désolidariser le bras de blocage 17 de la partie périphérique du cadre 36, de manière à faciliter ledit assemblage.

Pour réaliser les bras 14, 15, 37 et 38 selon l'axe Y, on utilise également toutes les étapes qui ont été décrites ci-dessus.

Les bras fins de guidage 81, 82, 83, 84 peuvent également être réalisés dans la plaque supérieure de la même façon que les bras fins de suspension et dans le même plan grâce à la couche d'arrêt de gravure.

Les bras fins de guidage 85, 86, 87, 88 peuvent aussi être réalisés dans la plaque inférieure grâce à la couche de silicium comprise entre les couches d'oxyde 90 et 92.

## Revendications

1. Accéléromètre comprenant une masse mobile (1) reliée à un cadre fixe (3), la masse mobile et le cadre fixe (3) étant définis dans l'empilement de deux plaques de silicium monocristallin dites plaque supérieure (6) et plaque inférieure (7), caractérisé en ce que :
- la plaque supérieure comprend :
• la partie supérieure (11) de la masse mobile, comportant une première et une seconde contre-butées (41, 42) le long d'un axe Y défini dans le plan de la masse mobile ;
• la partie supérieure (31) du cadre fixe, comportant une première et une seconde butées (43, 44) le long d'un axe X perpendiculaire à l'axe Y et défini dans le plan de la masse mobile ;
• la partie supérieure de la masse mobile (11) et la partie supérieure du cadre fixe (31) étant reliées par des bras de suspension (21, 22);
- la plaque inférieure comprend :
• la partie inférieure (12) de la masse mobile, comportant une troisième et une quatrième contre-butées (45, 46) le long de l'axe X;
• la partie inférieure (32) du cadre fixe, comportant une troisième et une quatrième butées (47, 48) le long de l'axe Y;
• les première et seconde contre-butées (41, 42) étant respectivement en regard des troisième et quatrième butées (47, 48);
• les troisième et quatrième contre-butées (45, 46) étant respectivement en regard des première et second butées (43, 44).

2. Accéléromètre selon la revendication 1, caractérisé en ce que :
- la partie supérieure de la masse mobile (11) comprend une première partie centrale (13) et des premier et second bras de blocage (14, 15) situés de part et d'autre de ladite première partie centrale, selon l'axe Y ;
- la partie supérieure du cadre fixe (31) comprend une partie périphérique (33) et des premier et second bras (34, 35) situés à l'intérieur de la partie périphérique, selon l'axe X, la plaque supérieure (6) comprenant des premier et second bras de suspension (21, 22) reliant la partie centrale de la partie supérieure de la masse mobile, aux premier et second bras de la partie périphérique ;
- la partie inférieure de la masse mobile (12) comprend une partie centrale (16) et des troisième et quatrième bras de blocage (17, 18) situés de part et d'autre de ladite seconde partie centrale, selon l'axe X ;
- la partie inférieure du cadre fixe (32) comprend une partie périphérique (36) et des troisième et quatrième bras (37, 38) situés à l'intérieur de la partie périphérique selon l'axe Y ;
- les première et seconde contre-butées (41, 42) étant définies dans les premier et second bras de blocage (14, 15) ;
- les première et seconde butées (43, 44) étant définies dans les - premier et second bras (34, 35) ;
- les troisième et quatrième contre-butées (45, 46) étant définies dans les troisième et quatrième bras de blocage (17, 18) ;
- les troisième et quatrième butées (47, 48) étant définies dans les troisième et quatrième bras (37, 38).

3. Accéléromètre selon la revendication 2, caractérisé en ce que les plaques (6) et (7) comprennent des bras fins de guidage, reliant la masse mobile (1) au cadre fixe (3), lesdits bras étant situés selon deux axes orientés à 45° des axes (X) et (Y).

4. Accéléromètre selon la revendication 3, caractérisé en ce que la plaque supérieure (6) comprend quatre bras supérieurs de guidage (81, 82, 83, 84) et que la plaque inférieure (7) comprend quatre bras inférieurs de guidage (85, 86, 87, 88), lesdits bras supérieurs de guidage (81, 82, 83, 84) étant situés au niveau supérieur de la plaque supérieure (6), lesdits bras inférieurs de guidage (85, 86, 87, 88) étant situés au niveau inférieur de la plaque inférieure (7).

5. Accéléromètre selon l'une des revendications 2 à 4, caractérisé en ce que les bras de suspension (21) et (22) comprennent des jauges piézorésistives.

6. Accéléromètre selon l'une des revendications 1 à 5, caractérisé en ce qu'il comprend un système d'asservissement électromagnétique de la masse mobile (1).

## Patentansprüche

1. Beschleunigungsmesser mit einer mit einem festen Rahmen (3) verbundenen beweglichen Masse (1), wobei die bewegliche Masse und der feste Rahmen (3) innerhalb des Stapels aus zwei, als obere (6) und untere (7) Platten bezeichneten Platten aus monokristallinem Silizium gebildet sind, dadurch gekennzeichnet, daß
- die obere Platte folgende Teile enthält:
• den oberen Teil (11) der beweglichen Masse, der einen ersten und einen zweiten Gegenanschlag (41, 42) entlang einer in der Ebene der beweglichen Masse definierten Achse Y aufweist;
• den oberen Teil (31) des festen Rahmens, der einen ersten und einen zweiten Anschlag (43, 44) entlang einer zur Achse Y senkrechten und in der Ebene der beweglichen Masse definierten Achse X aufweist;
• wobei der obere Teil der beweglichen Masse (11) und der obere Teil des festen Rahmens (31) durch Aufhängungsarme (21, 22) verbunden sind;
- die untere Platte folgende Teile enthält:
• den unteren Teil (12) der beweglichen Masse, der einen dritten und einen vierten Gegenanschlag (45, 46) entlang der Achse X aufweist;
• den unteren Teil (32) des festen Rahmens, der einen dritten und vierten Anschlag (47, 48) entlang der Achse Y aufweist;
• wobei der erste bzw. zweite Gegenanschlag (41, 42) gegenüber dem dritten bzw. vierten Anschlag (47, 48) liegt;
• wobei der dritte bzw. vierte Gegenanschlag (45, 46) gegenüber dem ersten bzw. zweiten Anschlag (47, 48) liegt.

2. Beschleunigungsmesser nach Anspruch 1, dadurch gekennzeichnet, daß
- der obere Teil der beweglichen Masse (11) einen ersten mittleren Teil (13) und einen ersten und zweiten Blockierarm (14, 15) aufweist, die auf der einen bzw. anderen Seite des ersten mittleren Teils gemäß der Achse Y liegen;
- der obere Teil des festen Rahmens (31) einen umlaufenden Teil (33) und einen ersten und zweiten Arm (34, 35) aufweist, die innerhalb des umlaufenden Teils gemäß der Achse X liegen, wobei die obere Platte (6) einen ersten und zweiten Aufhängungsarm (21, 22) aufweist, die den mittleren Teil des oberen Teils der beweglichen Masse mit dem ersten und dem zweiten Arm des umlaufenden Teils verbinden;
- der untere Teil der beweglichen Masse (12) einen mittleren Teil (16) und einen dritten und vierten Blockierarm (17, 18) aufweist, die auf der einen bzw. anderen Seite des zweiten mittleren Teils gemäß der Achse X liegen;
- wobei der erste und der zweite Gegenanschlag (41, 42) in dem ersten bzw. zweiten Blockierarm (14, 15) definiert sind;
- wobei der dritte und der vierte Gegenanschlag (45, 46) in dem dritten bzw. vierten Blockierarm (17, 18) definiert sind;
- wobei der dritte und der vierte Anschlag (47, 48) in dem dritten bzw. vierten Arm (37, 38) definiert sind.

3. Beschleunigungsmesser nach Anspruch 2, dadurch gekennzeichnet, daß die Platten (6) und (7) dünne Führungsarme aufweisen, die die bewegliche Masse (1) mit dem festen Rahmen (3) verbinden, wobei die Arme entlang zwei Achsen angeordnet sind, die in 45° zu den Achsen (X) und (Y) ausgerichtet sind.

4. Beschleunigungsmesser nach Anspruch 3, dadurch gekennzeichnet, daß die obere Platte (6) vier obere Führungsarme (81, 82, 83, 84) aufweisen und die untere Platte (7) vier untere Führungsarme (85, 86, 87, 88) aufweisen, wobei die oberen Führungsarme (81, 82, 83, 84) im unteren Bereich der unteren Platte (7) angeordnet sind.

5. Beschleunigungsmesser nach einem der Ansprüche 2 bis 4, dadurch gekennzeichnet, daß die Aufhängungsarme (21) und (22) piezoresistive Meßstäbe enthalten.

6. Beschleunigungsmesser nach einem der Ansprüche 1 bis 5, dadurch gekennzeichnet, daß er ein elektromagnetisches System zum Regeln der beweglichen Masse (1) enthält.

## Claims

1. Accelerometer comprising a moving mass (1) connected to a fixed frame (3), the moving mass (1) and the fixed frame (3) being defined in a stack of two monocrystalline silicon wafers known as the upper wafer (6) and the lower wafer (7), characterized in that:
- the upper wafer comprises:
• the upper part (11) of the moving mass, including a first and a second counter-stop (41,42) along an axis Y defined in the plane of the moving mass;
• the upper part (31) of the fixed frame, including a first and a second stop (43, 44) along an axis X perpendicular to the axis Y and defined in the plane of the moving mass;
• the upper part of the moving mass (11) and the upper part of the fixed frame (31) being connected by suspension arms (21, 22);
- the lower wafer comprises:
• the lower part (12) of the moving mass, including a third and a fourth counter-stop (45, 46) along the axis X;
• the lower part (32) of the fixed frame, including a third and a fourth stop (47, 48) along the axis Y;
• the first and second counter-stops (41, 42) being opposite the third and fourth stops (47, 48) respectively;
• the third and fourth counter-stops (45, 46) being opposite the first and second stops (43, 44) respectively.

2. Accelerometer according to Claim 1, characterized in that:
- the upper part of the moving mass (11) comprises a first central part (13) and first and second immobilizing arms (14, 15) lying one on either side of the said first central part, along the axis Y;
- the upper part of the fixed frame (31) comprises a peripheral part (33) and first and second arms (34, 35) lying inside the peripheral part, along the axis X, the upper wafer (6) comprising first and second suspension arms (21, 22) connecting the central part of the upper part of the moving mass to the first and second arms of the peripheral part;
- the lower part of the moving mass (12) comprises a central part (16) and third and fourth immobilizing arms (17, 18) lying one on either side of the said second central part, along the axis X;
- the lower part of the fixed frame (32) comprises a peripheral part (36) and third and fourth arms (37, 38) lying inside the peripheral part along the axis Y;
- the first and second counter-stops (41, 42) being defined in the first and second immobilizing arms (14, 15);
- the first and second stops (43, 44) being defined in the first and second arms (34, 35);
- the third and fourth counter-stops (45, 46) being defined in the third and fourth immobilizing arms (17, 18);
- the third and fourth stops (47, 48) being defined in the third and fourth arms (37, 38).

3. Accelerometer according to Claim 2, characterized in that the wafers (6) and (7) comprise slender guide arms connecting the moving mass (1) to the fixed frame (3), the said arms lying along two axes oriented at 45° to the axes (X) and (Y).

4. Accelerometer according to Claim 3, characterized in that the upper wafer (6) comprises four upper guide arms (81, 82, 83, 84) and that the lower wafer (7) comprises four lower guide arms (85, 86, 87, 88), the said upper guide arms (81, 82, 83, 84) lying towards the top of the upper wafer (6), the said lower guide arms (85, 86, 87, 88) lying towards the bottom of the lower wafer (7).

5. Accelerometer according to one of Claims 2 to 4, characterized in that the suspension arms (21) and (22) comprise piezoresistive gauges.

6. Accelerometer according to one of Claims 1 to 5, characterized in that it comprises a system for electromagnetically controlling the moving mass (1).
